# FASCICULE DE BREVET EUROPEEN

(11) **EP 0 675 474 B1**
(45) Date de publication et mention de la délivrance du brevet: **03.09.1997**
(21) Numéro de dépôt: 95400252.3
(22) Date de dépôt: 07.02.1995
(51) Int. Cl.: G09F 3/02, B65D 23/08

(54) **Manchon-support d'informations et son procédé de fabrication**
Hülsenförmiger-Informationsträger und Herstellungsverfahren
Sleeve-shaped information support and manufacturing method therefor

(30) Priorité: 29.03.1994 FR 9403677
(43) Date de publication de la demande: 04.10.1995
(73) Titulaire: DECOMATIC S.A., F-38290 La Verpillière (FR)
(72) Inventeur: Allegre, Jean-Luc, F-38090 Villefontaine (FR)
(74) Mandataire: Bernasconi, Jean

(56) Documents cités:
- DE-A- 3 924 790
- FR-A- 1 043 230

## Description

La présente invention a trait aux manchons destinés à être placés autour d'un récipient tel que bidon ou analogue, pour constituer un support d'information. D'une manière générale, ces manchons sont formés d'un corps fait d'une feuille de matière plastique qui est conformée pour s'adapter sur le pourtour du récipient, par exemple sous forme cylindrique. Cela signifie que le corps du manchon est formé avant son montage sur le récipient, autour duquel il pourra être adapté par exemple par étirement. La présente invention a également trait à un procédé de fabrication de manchons de ce type.

Ces manchons ont l'inconvénient de présenter une surface limitée pour la présentation des informations concernant le produit contenu dans le récipient. Cela est plus particulièrement vrai dans le domaine des produits phytosanitaires livrés en poudre ou en liquide dans des bidons, où, pour des raisons de législation, les fabricants sont contraints de présenter des indications de plus en plus nombreuses.

C'est pourquoi s'est développée dans ce domaine l'utilisation de moyens complémentaires d'information du type pochette adhésive, dans laquelle est insérée une notice complémentaire, que le fabricant appose sur le manchon proprement dit. Les risques d'arrachage de ces pochettes lors du transport et de la manipulation de ces bidons et de perte de la notice complémentaire après consultation en sont les principaux inconvénients.

Dans le domaine des étiquettes en papier, on avait bien proposé dans les années cinquante d'ajouter à l'étiquette un volet supplémentaire détachable (brevet français FR-A-1 043 230).

Jusqu'à présent, on n'avait pourtant jamais proposé un manchon en matière plastique à très grande surface de présentation d'information. En tout cas, la plus grande difficulté aurait été de concevoir une forme de réalisation permettant une fabrication à des coûts acceptables dans l'industrie.

La présente invention a donc pour objectif de remédier aux inconvénients des manchons de l'art antérieur en fournissant un manchon possédant une surface de présentation d'informations fortement augmentée par rapport aux manchons traditionnels, notamment de 100 à 400 %, tout en respectant une condition impérative qui est de ne pas augmenter de façon significative le coût de revient par rapport aux manchons traditionnels.

Un autre objectif de l'invention est de proposer un procédé simple et rapide de fabrication en continu de ces manchons à partir d'une bobine de film ou feuille en matière plastique, procédé qui puisse être entièrement automatisé.

Un autre objectif de l'invention est encore de proposer un tel procédé qui puisse être mis en oeuvre même dans le cadre de manchons destinés à de petits, voire de très petits supports.

Un autre objectif encore de l'invention est de proposer un tel manchon qui puisse être, facilement et à moindre coût, décliné en de nombreuses variantes.

La présente invention a ainsi pour objet un manchon destiné à être placé autour d'un récipient tel que bidon ou analogue pour constituer un support d'informations et formé d'un corps fait d'une feuille en matière plastique qui est conformée pour s'adapter sur le pourtour du récipient et apte à recevoir une impression, caractérisé en ce qu'au moins deux parties formant rabat sont fixées au corps de manchon par un moyen de fixation, chacune par un premier bord parallèle à la génératrice dudit corps, et s'étendent de façon à pouvoir venir recouvrir tout ou partie du corps de manchon, et en ce que l'une au moins des faces des parties formant rabat est également apte à recevoir ou présenter une impression.

L'invention permet notamment de concevoir et réaliser ce manchon à partir d'une seule feuille de matière plastique et sans avoir à découper celle-ci et à rapporter et fixer les différents éléments constitutifs du manchon, ce qui est très avantageux en ce qui concerne les coûts de production qui doivent être maintenus très bas pour en permettre une réelle exploitation industrielle.

On préfère donc que l'ensemble du manchon, avec toutes ses parties formant rabat et quel que soit leur nombre, soit formé d'une seule et même feuille de matière plastique.

Cette réalisation est notamment rendue possible grâce à la caractéristique très avantageuse consistant dans le fait que les parties formant rabat sont reliées par deux au corps de manchon par un même moyen de fixation, ce qui se traduit, sur le plan du procédé de fabrication, par la réalisation en une seule passe d'une fixation commune aux deux parties formant rabat.

Tout en restant notamment dans le cadre d'une réalisation en une seule et unique feuille de matière plastique, il est possible de prévoir des parties formant rabat supplémentaires. L'invention offre notamment, de manière très avantageuse, deux types d'évolution du manchon, qui peuvent en outre être combinés entre eux, et aux caractéristiques déjà décrites, à savoir, d'une part, un type dans lequel des parties formant rabat sont reliées séparément au corps de manchon en des emplacements diamétralement opposés l'un de l'autre vis-à-vis du corps de manchon et, d'autre part, un type dans lequel des parties formant rabat sont fixées ensemble les unes à la suite des autres, l'une d'elles étant aussi fixée au corps de manchon. L'intérêt est encore accru par le fait que chaque partie formant rabat peut être très avantageusement formée de deux parties de feuille pouvant toujours être issues de la même feuille de matière plastique initiale. Deux parties de feuille qui se correspondent forment un volet double. L'invention prévoit aussi que les deux bords, de ces volets, parallèles à la génératrice du corps de manchon puissent être solidarisés ensemble par des moyens de fixation. Il peut notamment s'agir des bords en liaison avec le corps de manchon ou avec d'autres parties formant rabat, ou encore de bords libres qui ne sont pas en liaison avec d'autres éléments constitutifs du manchon. Selon les termes de l'invention, un volet double fermé à ses deux bords parallèles à la génératrice constitue une seule partie formant rabat.

Un mode particulier de réalisation prévoit que certaines au moins des parties formant rabat peuvent être entièrement détachables grâce à la présence d'au moins une ligne de prédécoupe s'étendant en substance parallèlement à la ligne de pliage et au voisinage d'un moyen de fixation ou sur ce moyen. Ainsi, deux parties formant rabat d'un même volet double peuvent être détachables individuellement ou conjointement si la ligne de prédécoupe est ménagée dans le moyen de fixation, notamment une zone de soudure, ou si l'on était en présence d'un volet double fermé. On peut donc aussi détacher un tel volet double en le laissant fermé à ses deux bords opposés. De même, dans le cas où le manchon comporte plusieurs paires de parties formant rabats (c'est-à-dire plusieurs volets doubles), l'un, plusieurs ou la totalité de ceux-ci peuvent être rendus détachables. Toutes les combinaisons sont permises.

Le manchon peut comporter encore un moyen de liaison pour relier de manière amovible au corps de manchon le bord libre, parallèle à la génératrice dudit corps, des deux parties formant rabat, ce moyen permettant ou non plusieurs liaisons entre ces parties et le corps de manchon. Il peut s'agir par exemple d'un adhésif décollable à usage unique ou multiple.

A la place d'un tel moyen de liaison, on peut choisir d'utiliser un moyen dit de fixation dans le sens de l'invention, c'est-à-dire n'autorisant pas de libération, mais auquel on associe une ligne de prédécoupe ménagée dans les parties formant rabat.

Dans tous les cas où l'on parle de fixation entre parties de feuille, on préfère qu'il s'agisse d'une soudure.

L'invention a aussi pour objet un procédé de fabrication de tels manchons à partir d'une seule et même feuille de matière plastique, qui puisse être réalisé en continu et de manière entièrement automatisée, la feuille ou film de matière plastique pouvant être tiré d'une bobine.

Dans le procédé conforme à l'invention, on part de préférence d'une feuille préimprimée, on plie cette feuille sur elle-même suivant une ligne de pliage en formant ainsi deux parties de feuille superposées, et l'on solidarise ces deux parties de feuille entre elles suivant au moins une zone de solidarisation qui s'étend en substance parallèlement à la ligne de pliage. Ainsi, avec une zone de solidarisation, on obtiendra un corps de manchon délimité par la ligne de pliage et la zone de solidarisation et muni de deux parties formant rabat, qui peuvent encore être appelées volet double ouvert. On comprend que l'on a toute latitude dans le choix de l'emplacement de la zone de solidarisation. Si l'on réalise deux zones de solidarisation, on obtiendra un volet double ouvert à l'un de ses bords parallèles à la génératrice et deux volets doubles fermés aux deux bords (par référence aux bords parallèles à la génératrice du corps de manchon), l'un par les deux zones de solidarisation et l'autre par une zone de solidarisation et par la ligne de pliage. L'un quelconque de ces deux volets doubles fermés pourra être choisi pour former le corps de manchon. Pour les différentes étapes de pliage et de formation de zones de solidarisation, on travaillera de préférence par moitié, tiers, quart, etc. par référence à la feuille initialement pliée sur elle-même.

Sur cette base, le procédé pourra aussi prévoir éventuellement une opération de découpe supprimant la ligne de pliage, transformant le volet double fermé en volet à deux parties libres (volet double ouvert). A l'inverse, il pourra aussi réaliser une zone de solidarisation pour solidariser les bords des parties formant un volet double ouvert.

De préférence, on réalise les zones de solidarisation par soudure. Les zones de solidarisation peuvent être choisies suffisamment larges pour permettre d'y réaliser, de manière convenable, une ligne de prédécoupe afin que le détachement du volet double n'entraîne pas une désolidarisation des bords correspondants de ce volet.

Après avoir réalisé les zones de solidarisation, on rabat les différentes parties formant le manchon (corps de manchon, volets doubles ouverts ou fermés) et l'on appose un moyen d'adhésion amovible pour maintenir le manchon en position fermée.

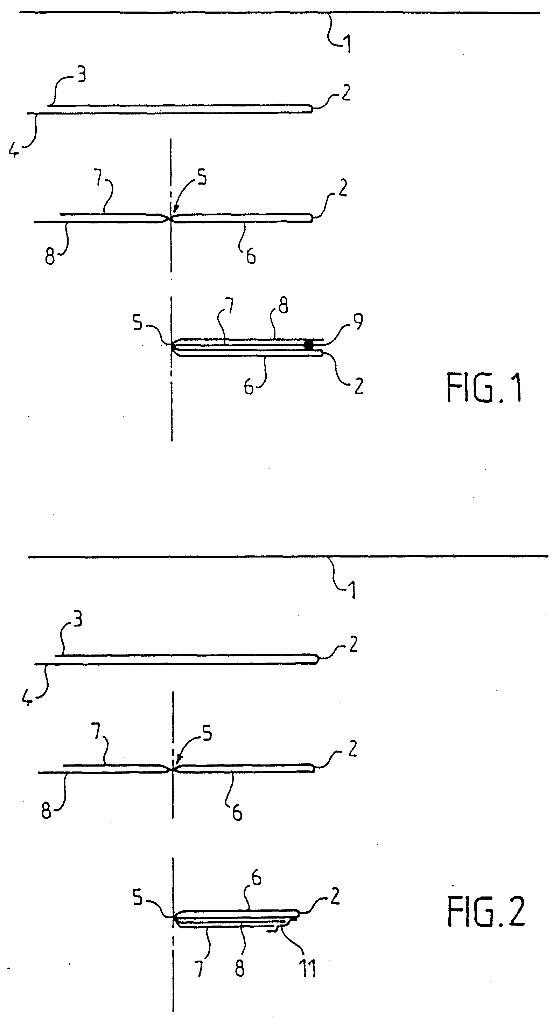

L'invention va être maintenant décrite plus en détail à l'aide de modes de réalisation de manchons selon l'invention, décrits ci-après en liaison avec leurs procédés de fabrication conformes à l'invention et avec le dessin annexé dans lequel les figures 1 à 8 montrent schématiquement les étapes de fabrication conduisant chaque fois à un manchon conforme à un mode de réalisation de l'invention.

Les figures 1 à 4 représentent, en vue de côté, les étapes conduisant à des manchons comportant deux parties formant rabat à bords libres, ce qui forme un volet double ouvert.

Les figures 5 et 6 représentent, en vue de côté, les étapes conduisant à des manchons comportant un volet double fermé et un volet double ouvert.

Les figures 7 et 8 représentent, en vue de côté, les étapes conduisant à des manchons comportant deux volets doubles ouverts.

Dans tous les cas, on part d'une feuille de matière plastique unique, indiquée par le repère numérique 1. La première étape consiste, comme on le voit sur les figures 1 à 8, en une opération de pliage ou dossage pour plier approximativement en deux la feuille 1, suivant une première ligne de pliage 2, de manière que l'un, 3, des deux bords libres 3 et 4 opposés à cette ligne de pliage 2, soit un peu en retrait vis-à-vis de l'autre 4.

A la figure 1, on réalise ensuite une passe de soudure de manière à souder ensemble les deux parties superposées de la feuille 1, suivant une zone de soudure 5 essentiellement parallèle à la ligne de pliage 2 et située environ à la moitié de la longueur de la feuille pliée. On obtient alors le corps de manchon proprement dit, repère numérique 6, formé par les parties de feuille délimitées par la ligne de pliage 2 et la zone de soudure 5, et deux volets 7 et 8 dont les extrémités libres sont les bords référencés respectivement 3 et 4. Ces deux volets sont alors rabattus sur le corps de manchon de telle façon que le volet 8, dont la longueur est un peu supérieure à celle du volet 7, se trouve à l'extérieur. Un moyen adhésif 9, permettant de multiples décollages/recollages, est situé entre le volet 8 et le corps de manchon 6, au voisinage de la ligne de pliage 2. La mise en place de ce moyen adhésif 9 peut être faite de toute manière connue du spécialiste.

La figure 2 montre une variante du procédé de la figure 1. On y rabat différemment les volets 7 et 8, de façon que ce soit le volet 7, plus court, qui se trouve à l'extérieur. On utilise alors une bande adhésive 11 pour réunir les bords 3 et 4 au corps de manchon 6, au voisinage de la ligne de pliage 2.

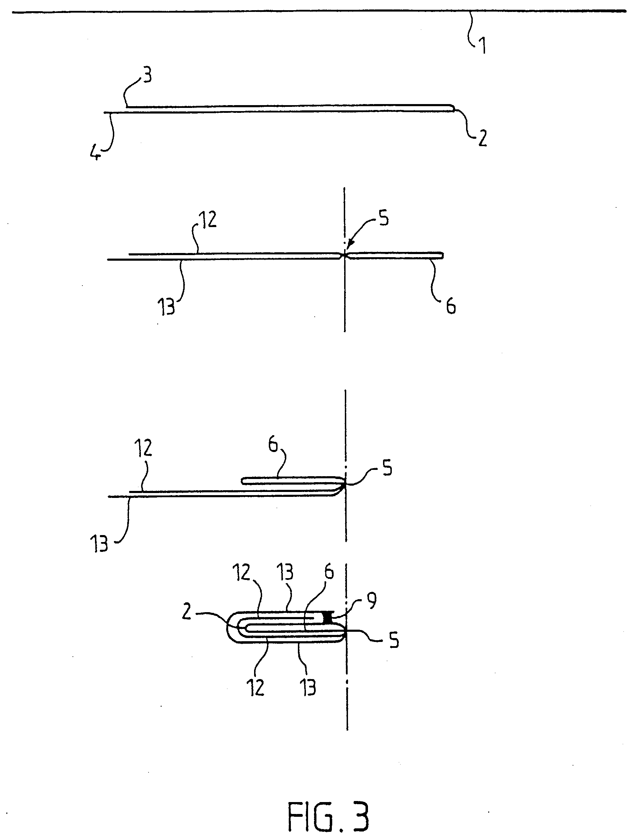

A la figure 3, après l'opération de pliage ou dossage comme aux figures 1 et 2, on travaille par tiers, la zone de soudure 5 étant réalisée environ au tiers de la longueur de la feuille 1 pliée, pris à partir de la ligne de pliage 2. On obtient alors deux volets 12 et 13 de grande longueur et le corps de manchon 6, analogue au précédent, que l'on rabat alors sur les volets 12, 13, plus exactement sur le volet 12, le plus court. Ensuite, on rabat la partie restante de ces volets sur le corps de manchon, le volet 12 étant encore ici celui qui se retrouve du côté du corps de manchon. Un moyen adhésif 9 est là encore présent entre le volet 13 et le corps de manchon, mais ici au voisinage de la zone de soudure 5, pour le maintien des volets en position fermée.

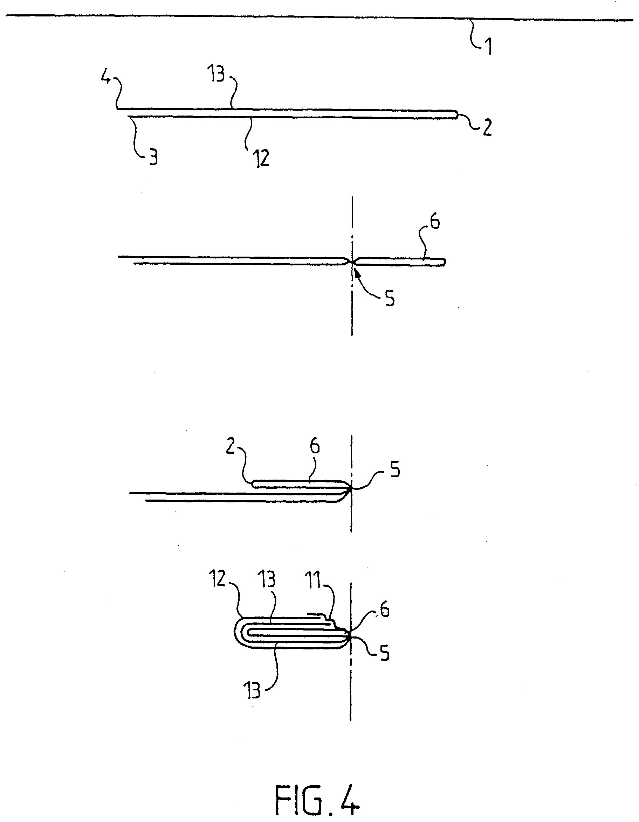

La figure 4 montre une variante du procédé de la figure 3, où l'on rabat le corps de manchon, qui vient d'être formé, du côté du volet 13, le plus long. En fin de procédé, on se retrouve dans la situation de la figure 2 où l'on assure le maintien des volets en position fermée à l'aide d'une bande adhésive 11 recouvrant le bord correspondant de chacun des volets et se terminant dans ce cas au voisinage de la zone de soudure 5.

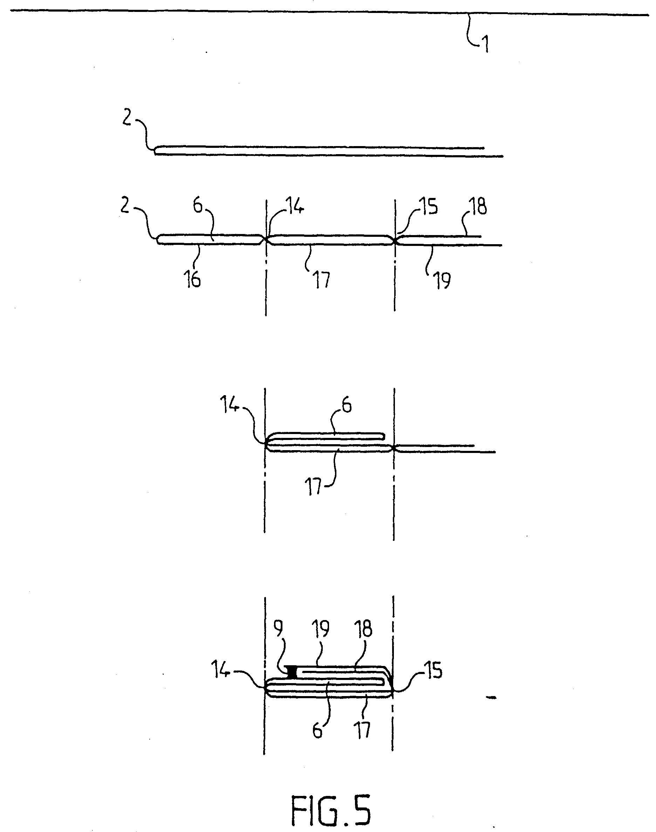

A la figure 5, la feuille 1 est d'abord pliée comme précédemment de manière à aboutir à deux parties de feuille dont l'une est légèrement plus courte que l'autre. On réalise simultanément deux zones de soudure 14 et 15 de manière à diviser sensiblement en trois la feuille 1 pliée. Le corps de manchon 6 peut correspondre au choix à la partie 16 délimitée par la ligne de pliage 2 et la zone de soudure 14 la plus proche ou la partie centrale 17 délimitée par les deux zones de soudure 14 et 15. A la figure 5, on a choisi la première solution, si bien que le corps de manchon 6 se prolonge par la partie 17 formant un volet double fermé, qui se prolonge elle-même par les deux volets libres 18 et 19, le volet 18 étant le plus court à l'image du volet 12 des modes de réalisation qui précèdent.

Dans la suite du procédé, on rabat le corps de manchon 6 sur la partie 17, puis les volets 18 et 19 sur le corps de manchon 6, le volet 18 se trouvant côté corps de manchon, mais à l'opposé de la partie 17 par rapport à ce dernier.

Un moyen adhésif 9 est prévu comme précédemment.

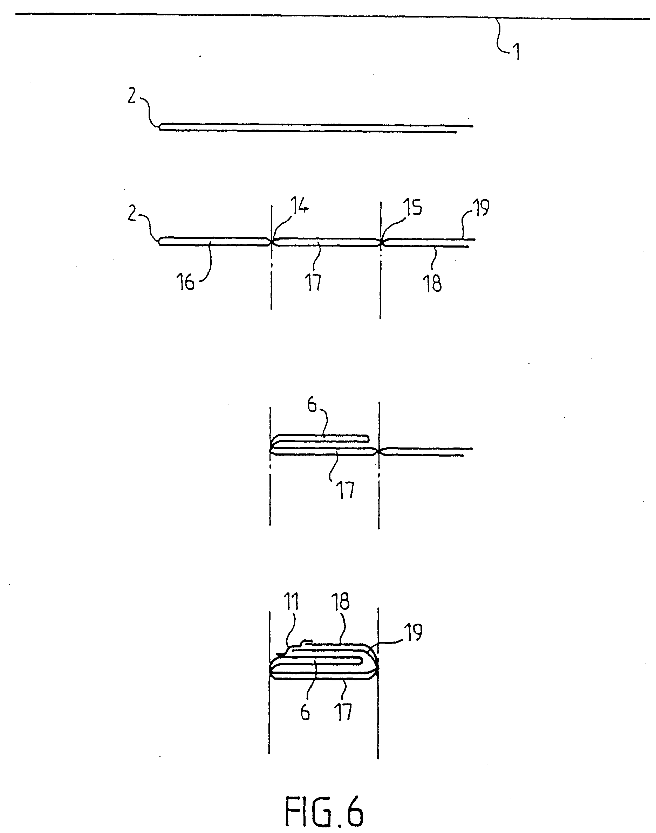

La figure 6 correspond à la variante du procédé et du manchon de la figure 5, selon laquelle le volet 19 se trouve face à la partie 16, ici le corps de manchon 6, et une bande adhésive 11 est mise en place.

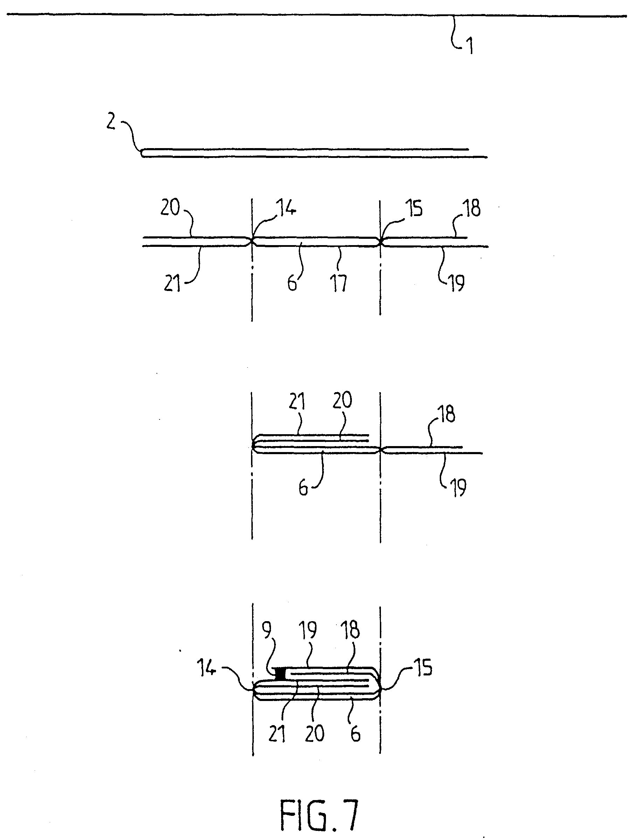

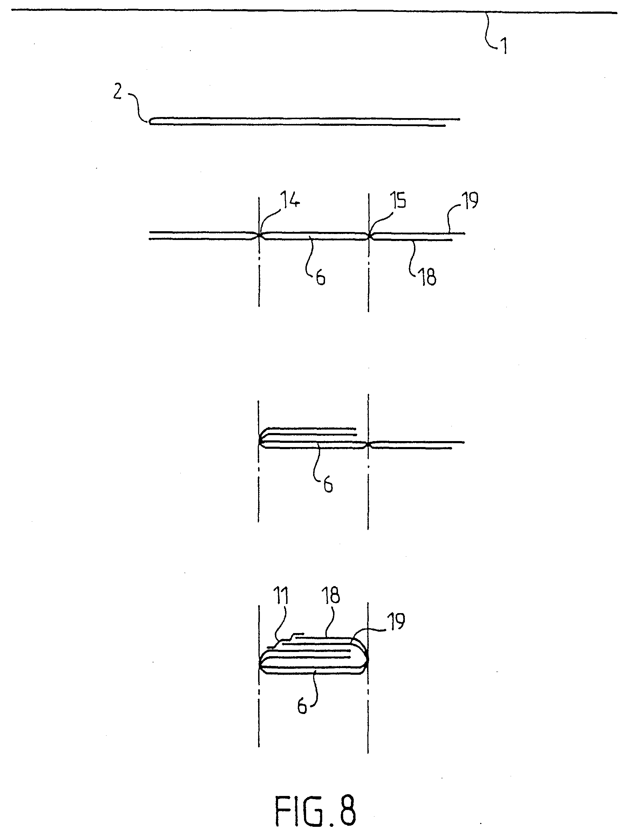

Les figures 7 et 8 sont des variantes des procédés et manchons décrits en relation avec les figures 5 et 6. Dans ce cas, après l'opération de pliage ou dossage de la feuille 1, la ligne de pliage 2 est éliminée par découpe, de manière à conduire, en fin de procédé, à l'obtention d'un manchon dont le corps de manchon 6 correspond à la partie centrale 17 et présente deux jeux de deux volets 18, 19 et 20, 21 (volets doubles ouverts) reliés deux à deux et au corps de manchon 6 par les zones de soudure respectivement 15 et 14. A noter que les volets 20 et 21 sont de mêmes dimensions et viennent s'interposer entre le corps de manchon 6 et les volets 18, 19 dans le manchon fini.

Pour la mise en oeuvre de ces manchons, on part de préférence d'une feuille ou film de polyéthylène étirable dont les faces utiles ont été imprimées à l'avance après traitement de surface approprié. La surface intérieure et/ou extérieure des corps de manchon 6 est imprimée, comme le sont les volets simples 7, 8, 12, 13, 18, 19, 20 et 21 et les surfaces des volets doubles fermés 16 ou 17. Une impression sur une surface intérieure du corps de manchon ou d'un volet peut se lire par transparence.

Pour la réalisation de manchons munis de parties formant rabat pouvant être détachées ou d'une combinaison de parties détachables et de parties non détachables, on réalise des prédécoupes. Les opérations nécessaires s'intègrent parfaitement aux modes de réalisation du procédé qui viennent d'être décrits. Le procédé conserve ses caractéristiques avantageuses en termes de rapidité et de faible coût de fabrication et en termes de travail en continu et d'automatisation.

Les prédécoupes peuvent être réalisées sur la feuille 1 dépliée mais préférentiellement sur cette feuille pliée lors de la première opération dite de pliage ou dossage. Elle peut concerner l'une ou les deux parties de feuille d'un volet double ouvert ou fermé et/ou soit l'un seulement, soit plusieurs ou la totalité des volets.

Les moyens d'adhésion 9 et 11 peuvent être remplacés par d'autres moyens d'attachement amovibles, par exemple par un moyen combiné prédécoupe-soudure. Dans ce dernier cas, les parties de feuille formant les volets sont de préférence de dimensions sensiblement égales. Une prédécoupe est réalisée le long des bords libres, par exemple 3 et 4 (figure 1). Après avoir rabattu les volets 7 et 8 (de mêmes dimensions dans ce cas) sur le corps de manchon 6, on réalise une opération de soudure (éventuellement combinée avec une découpe de rive de soudure) de manière à souder ensemble les bords 3 et 4 et la région de la ligne de pliage 2.

La matière plastique constituant les manchons conformes à l'invention peut notamment être du polyéthylène étirable. Les faces recevant l'impression pourront avoir été traitées pour permettre cette impression, par exemple par un traitement de type corona. Les manchons finis seront facilement mis en place par un étirement.

Le procédé est conduit en continu et de manière entièrement automatisable, à partir d'une bobine de feuille préimprimée, et permet de réaliser ces manchons perfectionnés d'une manière aisée, rapide et peu coûteuse.

Il va de soi que l'homme du métier peut envisager des développements en ce qui concerne tant le nombre de volets que leur type, sans sortir du cadre de l'invention, tel que défini dans les revendications suivantes.

## Revendications

1. Manchon destiné à être placé autour d'un récipient tel que bidon ou analogue pour constituer un support d'informations et formé d'un corps fait d'une feuille en matière plastique qui est conformée pour s'adapter sur le pourtour du récipient et apte à recevoir une impression, caractérisé en ce qu'au moins deux parties formant rabat (7,8 ; 12,13 ; 17,18,19 ; 20,21) sont fixées au corps de manchon (6) par un moyen de fixation (5,14,15), chacune par un premier bord parallèle à la génératrice dudit corps (6), et s'étendent de façon à pouvoir venir recouvrir tout ou partie du corps de manchon (6), et en ce que l'une au moins des faces des parties formant rabat est également apte à recevoir ou présenter une impression.

2. Manchon selon la revendication 1, caractérisé en ce qu'il est formé d'une seule et même feuille (1) en matière plastique.

3. Manchon selon la revendication 1 ou 2, caractérisé en ce que des parties formant rabat sont reliées par deux au corps de manchon par un même moyen de fixation (5,14).

4. Manchon selon l'une quelconque des revendications 1 à 3, caractérisé en ce que des parties formant rabat (18,19 ; 20,21) sont reliées séparément au corps de manchon (6) en des emplacements diamétralement opposés l'un de l'autre vis-à-vis du corps de manchon (6).

5. Manchon selon l'une quelconque des revendications 1 à 4, caractérisé en ce que des parties formant rabat (17 ; 18,19) sont fixées ensemble les unes à la suite des autres, l'une d'elles au moins étant aussi fixée au corps de manchon (6).

6. Manchon selon l'une quelconque des revendications 1 à 5, caractérisé en ce que l'une au moins des parties formant rabat est sous la forme d'un volet double dont les deux bords parallèles à la génératrice du corps de manchon sont ou non solidarisés ensemble par des moyens de fixation.

7. Manchon selon l'une quelconque des revendications 1 à 6, caractérisé en ce que certaines au moins des parties formant rabat présentent au moins une ligne de prédécoupe s'étendant en substance parallèlement à la ligne de pliage et au voisinage d'un moyen de fixation ou sur ce moyen.

8. Manchon selon l'une quelconque des revendications 1 à 7, caractérisé en ce qu'il est prévu un moyen de liaison (9,11) pour relier de manière amovible au corps de manchon (6) le bord libre (12,13), parallèle à la génératrice dudit corps (6), des deux parties formant rabat (7,8), ce moyen (9,11) permettant ou non plusieurs liaisons entre ces parties et le corps de manchon.

9. Manchon selon l'une quelconque des revendications 1 à 7, caractérisé en ce qu'il est prévu un moyen de fixation pour relier au corps de manchon le bord libre, parallèle à la génératrice dudit corps, des deux parties formant rabat, le moyen de fixation étant associé à une ligne de prédécoupe ménagée dans les deux parties formant rabat.

10. Manchon selon l'une quelconque des revendications 1 à 9, caractérisé en ce que les moyens de fixation (5,14,15) sont des soudures.

11. Procédé de fabrication de manchons selon l'une quelconque des revendications 1 à 10, dans lequel on part d'une feuille de matière plastique préimprimée, on plie cette feuille sur elle-même suivant une ligne de pliage en formant ainsi deux parties de feuille superposées, et l'on solidarise ces deux parties de feuille entre elles suivant au moins une zone de solidarisation qui s'étend en substance parallèlement à la ligne de pliage.

12. Procédé selon la revendication 11, caractérisé en ce que l'on réalise au moins une zone de solidarisation en un emplacement médian ou situé au tiers de la feuille pliée pris à partir de la ligne de pliage.

13. Procédé selon la revendication 11, caractérisé en ce que l'on réalise au moins deux zones de solidarisation, de préférence de manière à diviser la feuille pliée en parties de dimensions sensiblement égales.

14. Procédé selon la revendication 13, caractérisé en ce que l'on réalise une opération de découpe supprimant la ligne de pliage.

15. Procédé selon l'une quelconque des revendications 11 à 14, caractérisé en ce que l'on réalise les zones de solidarisation par soudure.

16. Procédé selon l'une quelconque des revendications 11 à 15, caractérisé en ce que l'on réalise, dans les parties formant rabat ou leurs zones de solidarisation, des lignes de prédécoupe parallèles à la ligne de pliage.

17. Procédé selon l'une quelconque des revendications 11 à 16, caractérisé en ce que l'on réalise les zones de solidarisation, on rabat les différentes parties formant le manchon les unes sur les autres et l'on appose un moyen d'adhésion amovible pour maintenir en position fermée.

## Patentansprüche

1. Hülse, die um einen Behälter, z.B. eine Kanne od.dgl., herumgelegt werden kann und dann einen Informationsträger darstellt, bestehend aus einem Körper, hergestellt aus einem Kunststoff-Blatt, der dem Umfang des Behälters angepaßt ist und einen Aufdruck aufnehmen kann, **dadurch gekennzeichnet**, daß mindestens zwei klappenförmige Teile (7,8;12,13;17,18,19; 20,21) am Hülsenkörper (6) durch ein Befestigungsmittel (5,14,15) befestigt sind, daß jeder Teil einen ersten Rand hat, der parallel zu der Mantellinie des Körpers (6) verläuft, und sich so erstreckt, daß er den Hülsenkörper (6) ganz oder teilweise bedeckt, und daß mindestens eine der Flächen der klappenförmigen Teile zugleich geeignet ist, einen Aufdruck aufzunehmen oder zu zeigen.

2. Hülse nach Anspruch 1, **dadurch gekennzeichnet**, daß diese aus einem einzigen Kunststoffblatt (1) besteht.

3. Hülse nach Anspruch 1 oder 2, **dadurch gekennzeichnet**, daß die klappenförmigen Teile von zwei Teilen des Hülsenkörpers mittels eines einzigen Befestigungsmittels (5,14) gebildet werden.

4. Hülse nach einem der Ansprüche 1 bis 3, **dadurch gekennzeichnet**, daß die klappenförmigen Teile (18,19;20,21) an Stellen am Hülsenkörper (6) befestigt sind, die getrennt voneinander sind und diametral einander gegenüber liegen.

5. Hülse nach einem der Ansprüche 1 bis 4, **dadurch gekennzeichnet**, daß die klappenförmigen Teile (17,18,19) als Ganzes hintereinander befestigt sind und daß mindestens der eine von ihnen am Hülsenkörper befestigt ist.

6. Hülse nach einem der Ansprüche 1 bis 5, **dadurch gekennzeichnet**, daß wenigstens einer der klappenförmigen Teile die Form einer Doppelklappe hat, deren beide Ränder, die parallel zu der Mantellinie des Hülsenkörpers sind, über das Befestigungsmittel verbunden sind oder nicht.

7. Hülse nach einem der Ansprüche 1 bis 6, **dadurch gekennzeichnet**, daß einige der klappenförmigen Teile mindestens eine vorgeschnittene Linie bilden, die sich im wesentlichen parallel zu der Faltlinie und neben dem Befestigungsmittel oder auf diesem erstreckt.

8. Hülse nach einem der Ansprüche 1 bis 7, **dadurch gekennzeichnet**, daß ein Verbindungsmittel (9,11) vorgesehen ist, mit dem der freie Rand (12,13) zweier klappenförmigen Teile (7,8), der parallel zu der Mantellinie des Körpers (6) ist, fest mit dem Hülsenkörper (6) verbunden werden kann, wobei das Verbindungsmittel (9,11) mehrere Verbindungen zwischen den Teilen und dem Hülsenkörper ermöglicht oder nicht.

9. Hülse nach einem der Ansprüche 1 bis 7, **dadurch gekennzeichnet**, daß ein Befestigungsmittel vorgesehen ist, mit dem der freie Rand zweier klappenförmigen Teile, der parallel zu der Mantellinie des Körpers ist, mit dem Hülsenkörper verbunden werden kann, wobei das Befestigungsmittel mit einer vorgeschnittenen Linie, die in die beiden klappenförmigen Teile eingearbeitet ist, verbunden ist.

10. Hülse nach einem der Ansprüche 1 bis 9, **dadurch gekennzeichnet**, daß die Befestigungsmittel (5,14,15) Schweißstellen sind.

11. Verfahren zur Herstellung von Hülsen gemäß einem oder mehreren der Ansprüche 1 bis 10, **dadurch gekennzeichnet**, daß man ein Kunststoffblatt bedruckt, das Blatt um eine Faltlinie faltet und auf diese Weise zwei aufeinanderliegende Blatteile bildet, daß man diese Teile mit mindestens einer Befestigungszone miteinander verbindet, die sich im wesentlichen parallel zu der Faltlinie erstreckt.

12. Verfahren nach Anspruch 11, **dadurch gekennzeichnet**, daß mindestens eine Befestigungszone an einer mittleren Stelle oder bei einem Drittel am gefalteten Blatt gerechnet von der Faltlinie vorgesehen wird.

13. Verfahren nach Anspruch 11, **dadurch gekennzeichnet**, daß mindestens zwei Befestigungszonen vorgesehen werden vorzugsweise derart, daß das gefaltete Blatt in in etwa gleich dimensionierte Teile geteilt wird.

14. Verfahren nach Anspruch 13, **dadurch gekennzeichnet**, daß man die Faltlinie durch eine Vorschnittlinie ersetzt.

15. Verfahren nach einem der Ansprüche 11 bis 14, **dadurch gekennzeichnet**, daß die Befestigung durch Schweißen erfolgt.

16. Verfahren nach einem der Ansprüche 11 bis 15, **dadurch gekennzeichnet**, daß in den Klappen oder in deren Befestigungszonen die Vorschnittlinien parallel zu der Faltlinie sind.

17. Verfahren nach einem der Ansprüche 11 bis 16, **dadurch gekennzeichnet**, daß die Befestigungszonen geschaffen werden, daß die verschiedenen Teile, die die Hülse bilden, aufeinandergeklappt werden und daß ein entfernbarer Klebstoff aufgetragen wird, um die Teile in einer Schließstellung zu halten.

## Claims

1. Sleeve intended to be placed around a container, such as a can or the like, in order to constitute an information medium and formed by a body made of a plastic sheet which is shaped in order to fit on the perimeter of the container and capable of taking printing, characterized in that at least two flap-forming parts (7, 8; 12, 13; 17, 18, 19; 20, 21) are fixed to the sleeve body (6) by a fixing means (5, 14, 15), each by a first edge parallel to the generatrix of said body (6), and extend so as to be able to end up covering all or part of the sleeve body (6), and in that at least one of the faces of the flap-forming parts is also capable of taking or displaying printing.

2. Sleeve according to Claim 1, characterized in that it is formed by one and the same plastic sheet (1).

3. Sleeve according to Claim 1 or 2, characterized in that flap-forming parts are connected in pairs to the sleeve body by the same fixing means (5, 14).

4. Sleeve according to any one of Claims 1 to 3, characterized in that flap-forming parts (18, 19; 20, 21) are connected separately to the sleeve body (6) at points diametrically opposite each other with respect to the sleeve body (6).

5. Sleeve according to any one of Claims 1 to 4, characterized in that flap-forming parts (17; 18, 19) are fixed together one after the other, at least one of them also being fixed to the sleeve body (6).

6. Sleeve according to any one of Claims 1 to 5, characterized in that at least one of the flap-forming parts is in the form of a double panel whose two edges parallel to the generatrix of the sleeve body may or may not be fastened together by fixing means.

7. Sleeve according to any one of Claims 1 to 6, characterized in that at least some of the flap-forming parts have at least one prescore line extending substantially parallel to the folding line and in the vicinity of a fixing means or on this means.

8. Sleeve according to any one of Claims 1 to 7, characterized in that a joining means (9, 11) is provided in order to removably connect, to the sleeve body (6) the free edge (12, 13), parallel to the generatrix of said body (6), of the two flap-forming parts (7, 8), which means (9, 11) may or may not enable a number of joins to be made between these parts and the sleeve body.

9. Sleeve according to any one of Claims 1 to 7, characterized in that a fixing means is provided in order to connect to the sleeve body the free edge, parallel to the generatrix of said body, of the two flap-forming parts, the fixing means being combined with a prescore line made in both flap-forming parts.

10. Sleeve according to any one of Claims 1 to 9, characterized in that the fixing means (5, 14, 15) are welds.

11. Process for manufacturing sleeves according to any one of Claims 1 to 10, wherein, starting from a preprinted sheet of plastic, this sheet is folded on itself along a folding line thus forming two superposed parts of the sheet, and these two parts of the sheet are fastened together along at least one fastening zone which extends substantially parallel to the folding line.

12. Process according to Claim 11, characterized in that at least one fastening zone is produced at a point midway along or one third of the way along the folded sheet from the folding line.

13. Process according to Claim 11, characterized in that at least two fastening zones are produced, preferably so as to divide the folded sheet into parts of substantially equal size.

14. Process according to Claim 13, characterized in that a cutting operation is performed, dispensing with the folding line.

15. Process according to any one of Claims 11 to 14, characterized in that the fastening zones are produced by welding.

16. Process according to any one of Claims 11 to 15, characterized in that prescore lines parallel to the folding line are produced in the flap-forming parts or their fastening zones.

17. Process according to any one of Claims 11 to 16, characterized in that the fastening zones are produced, the various parts forming the sleeve are folded over each other, and a removable adhesion means is affixed in order to keep them in the closed position.
